# EUROPEAN PATENT APPLICATION

(11) **EP 2 177 916 A1**
(43) Date of publication of application: **21.04.2010**
(21) Application number: 08828844.4
(22) Date of filing: 25.08.2008
(51) Int. Cl.: G01N 35/10, G01N 1/00

(54) **DISPENSING NOZZLE AND AUTOMATIC ANALYSIS DEVICE**

(30) Priority: 31.08.2007 JP 2007226970
(71) Applicant: Beckman Coulter, Inc., Brea, CA 92821 (US)
(72) Inventor: FUKUSHIMA, Norichika, Shizuoka, 4110931 (JP); NISHIMURA, Isao, Shizuoka, 4110931 (JP); TAKEYA, Mariko, Shizuoka, 4110931 (JP)
(74) Representative: Rocke, Carsten
(86) International application number: PCT/JP2008/065127
(87) International publication number: WO 2009/028469

(57) **Abstract**

A dispensing nozzle (11) in an automatic analyzer includes a holding tube portion (11a) that holds a target fluid for dispensing and a discharge end face (11b) that is formed at a tip of the holding tube portion (11a) and that sucks in and discharges the fluid through an opening (11c) formed thereon. The discharge end face (11b) has a greater contact angle with the fluid than the inner face of the holding tube portion (11a). The boundary between the inner face of the holding tube portion (11a) and the discharge end face (11b) represents a boundary between differing contact angles with the fluid. An automatic analyzer (1) includes the dispensing nozzle (11) for dispensing specimens or reagents.

## Description

### TECHNICAL FIELD

The present invention relates to a dispensing nozzle and an automatic analyzer.

### BACKGROUND ART

Typically, an automatic analyzer that analyzes a biological sample, such as blood or body fluid, makes use of a dispensing device for dispensing specimens or fluid samples, such as reagents, to reaction vessels. To achieve dispensing of a fluid sample with precision, a dispensing device is known that obtains the volume of air inside a dispensing nozzle at the time of starting the discharge of the fluid sample and calculates, from the obtained volume of air, the plunging amount of a plunger that needs to be disposed for dispensing a predetermined amount of the fluid sample (for example, see Patent Document 1).

Patent Document 1: Japanese Patent Application Laid-open No. 2004-20320

### DISCLOSURE OF INVENTION

### PROBLEM TO BE SOLVED BY THE INVENTION

Since the dispensing device disclosed in Patent Document 1 needs to have means for obtaining the volume of air inside the dispensing nozzle, the configuration thereof becomes complex. In addition, while dispensing fluid samples over a broad viscosity range, it cannot be necessarily expected that the dispensing precision increases.

The present invention has been made in view of the above, and it is an object of the present invention to provide a dispensing nozzle and an automatic analyzer that have a simple configuration and that enable a high degree of precision in dispensing fluid samples over a broad viscosity range.

### MEANS FOR SOLVING PROBLEM

To solve the problem described above and achieve the object, a dispensing nozzle according to the present invention includes a holding tube portion that holds a fluid as a dispensing target; and a discharge end face that is formed at a tip of the holding tube portion and that sucks in and discharges the fluid through an opening formed thereon, wherein the discharge end face has a greater contact angle with the fluid than an inner face of the holding tube portion.

In the dispensing nozzle according to the present invention as set forth in the invention described above, the discharge end face has a non-affinity film having non-affinity with the fluid, the non-affinity film formed on a surface of the discharge end face.

In the dispensing nozzle according to the present invention as set forth in the invention described above, the holding tube portion has an affinity film having affinity with the fluid, the affinity film formed on the inner face of the holding tube portion.

In the dispensing nozzle according to the present invention as set forth in the invention described above, a boundary between the inner face of the holding tube portion and the discharge end face represents a boundary between differing contact angles with the fluid.

In the dispensing nozzle according to the present invention as set forth in the invention described above, the opening formed on the discharge end face is singular.

To solve the problem described above and achieve the object, an automatic analyzer according to the present invention causes a reaction between a specimen and a reagent by stirring and analyzing a reaction liquid by measuring an optical property thereof, the automatic analyzer including the dispensing nozzle for dispensing either one of the specimen or the reagent.

### EFFECT OF THE INVENTION

A dispensing nozzle according to the present invention is processed so that a discharge end face has a greater contact angle with a fluid to be dispensed than the inner face of a holding tube portion. An automatic analyzer according to the present invention performs specimen dispensing using that dispensing nozzle. Therefore, dispensing of fluid samples over a broad viscosity range can be performed with a simple configuration and a high degree of precision.

### BRIEF DESCRIPTION OF DRAWINGS

FIG. 1 is a configuration diagram explaining a schematic configuration of an automatic analyzer according to the present invention including a dispensing nozzle according to the present invention.
FIG. 2 is a perspective view showing a schematic configuration of a dispensing device including the dispensing nozzle according to the present invention.
FIG. 3 is a vertical sectional view showing the dispensing nozzle according to the present invention.
FIG. 4 is an enlarged view showing a portion A of the dispensing nozzle illustrated in FIG. 3.
FIG. 5 is a schematic diagram showing a first example of a non-affinity film formed on a discharge end face of the dispensing nozzle according to the present invention.
FIG. 6 is a schematic diagram showing a second example of the non-affinity film formed on the discharge end face of the dispensing nozzle according to the present invention.
FIG. 7 is a schematic diagram showing a third example of the non-affinity film formed on the discharge end face of the dispensing nozzle according to the present invention.
FIG. 8 is a schematic diagram showing a fourth example in which an affinity film having affinity with a target liquid for dispensing is formed on the inner face of an holding tube portion of the dispensing nozzle according to the present invention so that the discharge end face has a greater contact angle with the target fluid for dispensing than the inner face of the holding tube portion.

### EXPLANATIONS OF LETTERS OR NUMERALS

- 1: Automatic analyzer
- 2: First reagent table
- 3: Second reagent table
- 5: Reaction table
- 6: Reaction vessel
- 7: First reagent dispensing device
- 8: Second reagent dispensing device
- 9: Specimen container transferring unit
- 10: Specimen dispensing device
- 11: Dispensing nozzle
- 11a: Holding tube portion
- 11b: Discharge end face
- 11c: Opening
- 11d: Non-affinity film
- 12: Nozzle driving system
- 13: Rotating motor
- 14: Elevating motor
- 15: Pump driving system
- 16: Pump
- 17: Valve
- 21: Stirring unit
- 22: Photometer unit
- 23: Cleaning unit
- 25: Control unit
- 26: Input unit
- 27: Display unit

### BEST MODE(S) FOR CARRYING OUT THE INVENTION

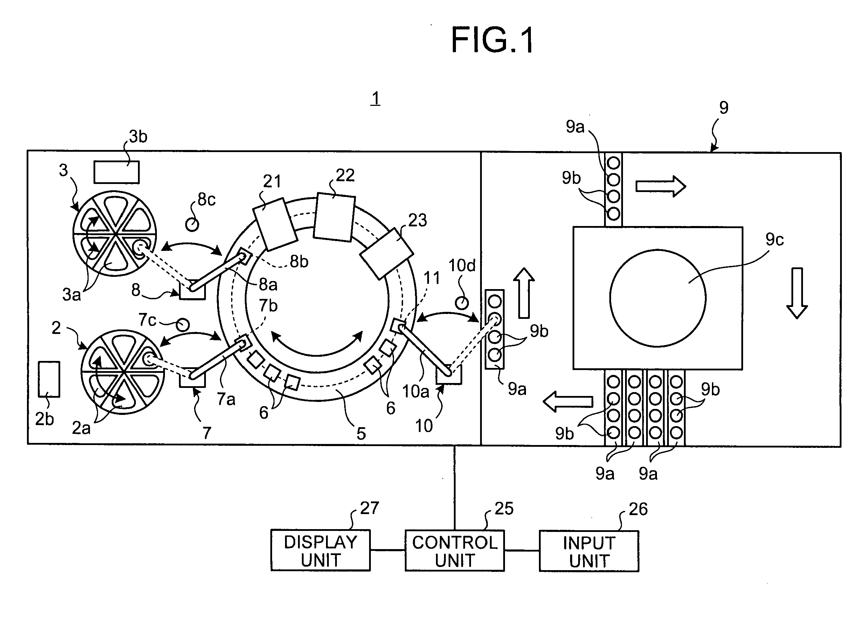

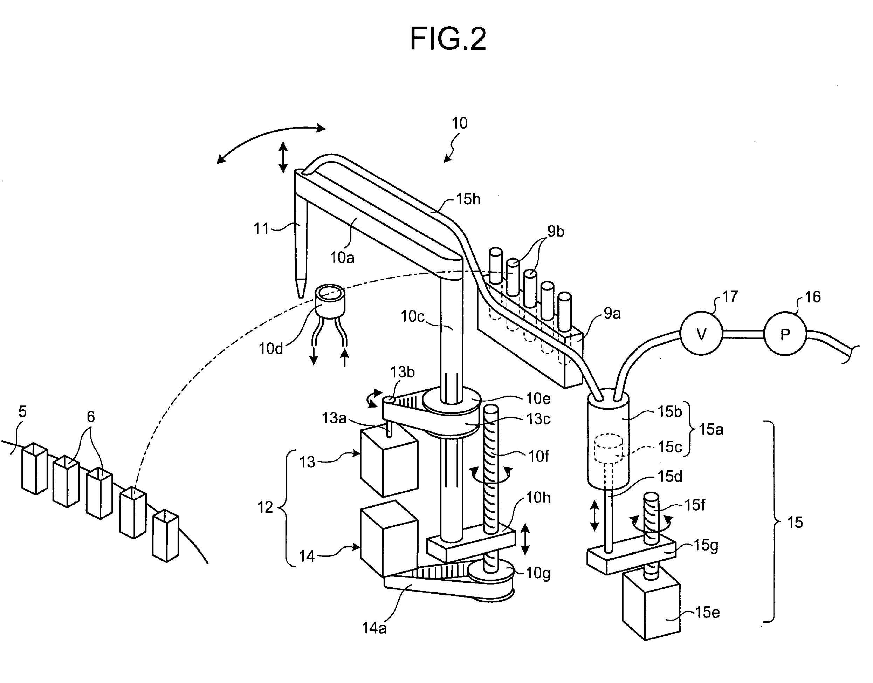

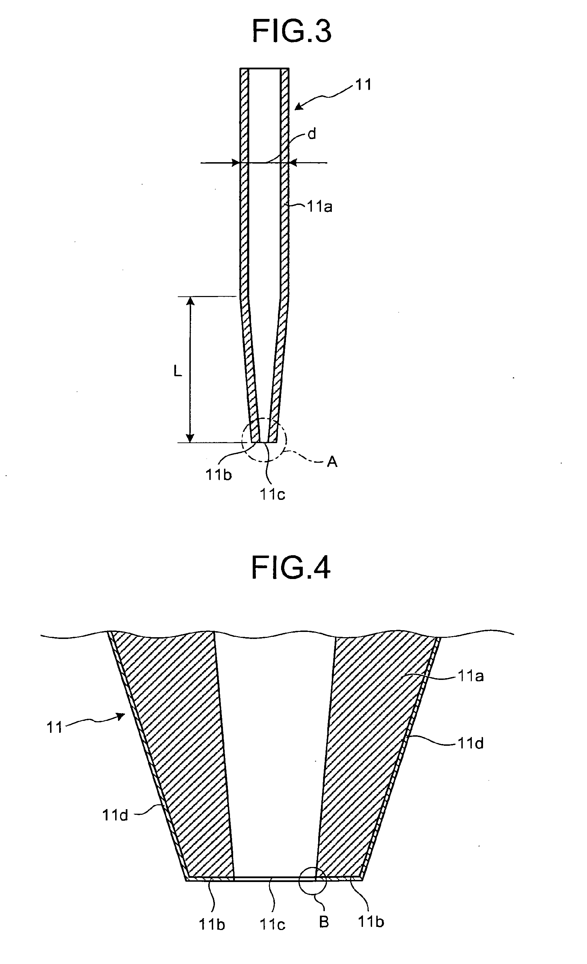

Exemplary embodiments for a dispensing nozzle and an automatic analyzer according to the present invention will be described below in detail with reference to the accompanying drawings. FIG. 1 is a configuration diagram explaining a schematic configuration of an automatic analyzer according to the present invention including a dispensing nozzle according to the present invention. FIG. 2 is a perspective view showing a schematic configuration of a dispensing device including the dispensing nozzle according to the present invention. FIG. 3 is a vertical sectional view showing the dispensing nozzle according to the present invention. FIG. 4 is an enlarged view showing a portion A of the dispensing nozzle illustrated in FIG. 3.

As illustrated in FIG. 1, an automatic analyzer 1 includes a first reagent table 2, a second reagent table 3, a reaction table 5, a first reagent dispensing device 7, a second reagent dispensing device 8, a specimen container transferring unit 9, a specimen dispensing device 10, a stirring unit 21, a photometer unit 22, a cleaning unit 23, and a control unit 25.

The first reagent table 2 and the second reagent table 3 have an identical configuration. Hence, the description is given for only the first reagent table 2 and, regarding the second reagent table 3, the corresponding components are referred to by corresponding reference numbers.

As illustrated in FIG. 1, the first reagent table 2 transports, upon being rotated by a driving unit, a plurality of reagent vessels 2a held therein in the circumferential direction. The first reagent table 2 includes a first reading unit 2b that is disposed outside the outer circumference thereof and that reads information from an information recording medium such as a barcode label attached to a plurality of the reagent vessels 2a.

As illustrated in FIG. 1, on the reaction table 5 are arranged a plurality of reaction vessels 6 in the circumferential direction. The reaction table 5 transports the reaction vessels 6 upon being rotated normally or reversely by a driving unit, which is different from the driving units that rotate the reagent tables 2 and 3. The reaction table 5 rotates, for example, for ((1 circle)-(1 reaction vessel))/4 in one cycle in the clockwise direction and completes rotation of ((1 circle)-(1 rotation vessel)) in four cycles.

The reaction vessels 6 are rectangular tube-like cuvettes having a small capacity of a few nL to a few hundred µL. The reaction vessels 6 are made of a transparent material, such as glass including heat-resistant glass or synthetic resin including cyclic olefin or polystyrene, through which can pass 80% or more of the light that is included in an analyzing light emitted by the photometer unit 22. To the reaction vessels 6 are dispensed reagents from the reagent vessels 2a of the first reagent table 2 and from reagent vessels 3a of the second reagent table 3 by the first reagent dispensing device 7 and the second reagent dispensing device 8, respectively, which are disposed adjacent to the reaction table 5.

Herein, the first reagent dispensing device 7 and the second reagent dispensing device 8 have an identical configuration. Hence, the description is given for only the first reagent dispensing device 7 and, regarding the second reagent dispensing device 8, the corresponding components are referred to by corresponding reference numbers.

As illustrated in FIGS. 1 and 2, the first reagent dispensing device 7 is rotated in the direction of an arrow within the horizontal plane, and includes an arm 7a that moves up and down a dispensing nozzle 7b for dispensing the reagent. One end of the arm 7a is supported at the upper portion of a supporting column (not illustrated). The first reagent dispensing device also includes a cleaning tank 7c that is used in cleaning the dispensing nozzle 7b with cleaning water and that is disposed on the movement locus of the dispensing nozzle 7b. The cleaning tank 7c is used, on the one hand, to dispose of the cleaning water that has cleaned the inside of the dispensing nozzle 7b and is discharged from the dispensing nozzle 7b and used, on the other hand, to clean the outside of the dispensing nozzle 7b with the cleaning water that is pumped inside the tank.

As illustrated in FIG. 1, the specimen container transferring unit 9 is a transferring means that transfers a plurality of racks 9a step by step along the direction of an arrow. The racks 9a hold a plurality of specimen vessels 9b containing specimens. In the center of the specimen container transferring unit 9 is disposed a cool container 9c that houses emergency specimens. Each time the step-moving operation of the racks 9a while being transferred by the specimen container transferring unit 9 is halted, the specimen dispensing device 10 dispenses a specimen from the specimen vessel 9b to a reaction vessel 6.

As illustrated in FIG. 2, the specimen dispensing device 10 rotates in the horizontal direction and includes a driving arm 10a that moves up and down, a dispensing nozzle 11 according to the present invention that is supported at the driving arm 10a, a supporting column 10c that supports the driving arm 10a, and a cleaning tank 10d that is used in cleaning the dispensing nozzle 11. To the cleaning tank 10d are connected a pipe used to pump cleaning water inside the tank and a pipe used to drain the cleaning water that, upon being pumped inside the tank, cleans the outside face of the dispensing nozzle 11. In an identical manner to the cleaning tank 7c in the first reagent dispensing device 7, the cleaning tank 10d is disposed on the movement locus of the dispensing nozzle 11. The specimen dispensing device 10 also includes a nozzle driving system 12 and a pump driving system 15 that enable performing the dispensing operation.

Herein, the dispensing nozzle 11 according to the present invention is manufactured by processing a metal, such as stainless-steel, or by performing injection molding on synthetic resin, such as polystyrene. As illustrated in FIGS. 3 and 4, the dispensing nozzle 11 includes a holding tube portion 11a that holds the target fluid for dispensing and a discharge end face 11b that is formed at the tip of the holding tube portion 11a and that sucks in and discharges the fluid through an opening 11c formed thereon. In the dispensing nozzle 11, the tip of the holding tube portion 11a is formed in a tapering manner and the discharge end face 11b is processed to have a greater contact angle with the fluid than the inner face of the holding tube portion 11a. For that, on at least the face of the discharge end face 11b at the tip of the dispensing nozzle 11 as illustrated in FIG. 3 is formed a non-affinity film 11d that is made of fluorine contained resin or silicone resin and that has non-affinity with the target fluid for dispensing. Therefore, the boundary between the inner face of the holding tube portion 11a and the discharge end face 11b (for example, see a portion B in FIG. 4) represents the boundary between differing contact angles with the fluid. In this way, by coating the discharge end face 11b with the non-affinity film 11d, the anti-drip property with respect to the fluid being dispensed improves in the dispensing nozzle 11.

The nozzle driving system 12 moves the dispensing nozzle 11 up and down and also rotates it. As illustrated in FIG. 2, the nozzle driving system 12 includes a rotating motor 13 and an elevating motor 14. The rotating motor 13 includes a rotating shaft 13a, a wheel 13b attached to the rotating shaft 13a, and a timing belt 13c wound around between the wheel 13b and a wheel 10e that is attached to the supporting column 10c. The elevating motor 14 includes a timing belt 14a that is wound around a wheel attached to a rotating shaft thereof and a wheel 10g attached to the lower end of a threaded shaft 10f. Herein, the threaded shaft 10f is screwed through an elevating block 10h that is attached to the lower end of the supporting column 10c.
The threaded shaft 10f and the elevating block 10h together form a ball screw.

The pump driving system 15 causes fluid dispensing to the dispensing nozzle 11, and includes a plunger pump 15a and a dispensing motor 15e as illustrated in FIG. 2. The plunger pump 15a includes a cylinder 15b and a plunger 15c that is driven to reciprocate by the dispensing motor 15e. The dispensing motor 15e is connected to a threaded shaft 15f that is attached to a rotating shaft and screwed through an elevating block 15g. To the elevating block 15g is coupled the lower end of a rod 15d that elongates from the plunger 15c. Herein, in the plunger pump 15a, the cylinder 15b is connected to the dispensing nozzle 11 and to a cleaning water tank by pipes 15h. On the pipe 15h that connects the cylinder 15b to the cleaning water tank are disposed a pump 16 and a valve 17.

The pump 16 pumps the cleaning water filled in the cleaning water tank to the cylinder 15b in the pump driving system 15. The valve 17 is used to gate the corresponding pipe 15h and switch over the flow of cleaning water through the pipe 15h that connects the cleaning water tank to the pump driving system 15.

As illustrated in FIG. 1, the stirring unit 21 is disposed on the outer circumference of the reaction table 5 and adjacent to the second reagent dispensing device 8.
The stirring unit 21 stirs the fluid samples that contain the specimens and the reagents and that are dispensed to the reaction vessels 6. As the stirring unit 21, for example, a stirring device is used that stirs the fluid samples with face acoustic wave elements in a contactless manner or that stirs the fluid samples with a stir bar.

As illustrated in FIG. 1, the photometer unit 22 is disposed between the stirring unit 21 and the cleaning unit 23 on the outer circumference of the reaction table 5. The photometer unit 22 emits an analyzing light that is used in analyzing the reaction liquids formed by the reaction of the reagents and the specimens. The photometer unit 22 also outputs to the control unit 25 optical signals regarding the light quantities of the analyzing light that passes through the reaction liquids in the reaction vessels 6.

As illustrated in FIG. 1, the cleaning unit 23 is disposed on the outer circumference of the reaction table 5 and adjacent to the specimen dispensing device 10. The cleaning unit 23 repeats for a plurality of times the operations of sucking in a reaction liquid from a reaction vessel 6 using a nozzle and discharging it, and then the operations of injecting a cleaning liquid such as a detergent liquid or cleaning water from the nozzle and sucking in it. Because of that, the reaction vessels 6 that were subjected to photometry by the photometer unit 22 get cleaned.

The control unit 25 is, for example, a microcomputer that is connected to the automatic analyzer 1 as illustrated in FIG. 1. The control unit 25 controls the operations of each component of the automatic analyzer 1 and analyzes, based on the optical signals output by the photometer unit 22, the constituent concentration of the specimens by referring to the absorbance of the reaction liquids. In addition, according to an analysis instruction input from an input unit 26 such as a keyboard, the control unit 25 administers the analysis operation while controlling the operations of each component and displays on a display unit 27 such as a display panel the analysis result, warning information, and a variety of other information based on a display instruction input from the input unit 26.

The automatic analyzer 1 configured in the abovementioned manner operates under the control of the control unit 25. In the automatic analyzer 1, the specimen dispensing device 10 sequentially dispenses specimens from a plurality of the specimen vessels 9b held in the racks 9a to a plurality of the reaction vessels 6 as they are transported along the circumferential direction by the rotating reaction table 5. After the sequential dispensing of the specimens to the reaction vessels 6, the reagent dispensing systems 7 and 8 sequentially dispense reagents from the reagent vessels 2a and 3a, respectively, to the reaction vessels 6.

Thus, each time the reaction table 5 comes to a halt, the stirring unit 21 sequentially stirs a reaction vessel 6 to which reagents and a specimen are dispensed in the abovementioned manner so that the reagents and the specimen undergo reaction. When the reaction table 5 starts rotating again, that particular reaction vessel 6 passes through the photometer unit 22. At that time, the photometer unit 22 performs photometry on the reaction liquid obtained by the reaction of the reagents and the specimen in that particular reaction vessel 6. The control unit 25 then analyzes the constituent concentration of the specimen. After the photometry is performed on the reaction liquid, the reaction vessel 6 is transferred to the cleaning unit 23 for cleaning and then reused in specimen analysis.

Meanwhile, as illustrated in FIGS. 3 and 4, on at least the face of the discharge end face 11b at the tip of the dispensing nozzle 11 according to the present invention is formed the non-affinity film 11d made of fluorine contained resin or silicone resin having non-affinity with the target fluid for dispensing. In the automatic analyzer 1, therefore, each time the step-moving operation of the racks 9a while being transferred by the specimen container transferring unit 9 is halted and the specimen dispensing device 10 dispenses a specimen to a reaction vessel 6, the specimen is dispensed with good anti-drip property even if a plurality of the specimens being dispensed have a broad viscosity range. Thus, for a plurality of the specimens having differing viscosities, specimen dispensing can be performed with a high degree of precision while preventing variation in the dispensing quantity.

Herein, to estimate the performance of the dispensing nozzle 11 according to the present invention in which the non-affinity film 11d is formed as a non-affinity film of fluorine contained resin, the dispensing nozzle 11 filled with a test specimen was immersed at the lower end in the test specimen and then pulled out therefrom. Then, a fluid analysis program was implemented to obtain the quantity of test specimen (nL) getting attached to the discharge end face 11b after the dispensing nozzle 11 was pulled out from the test specimen and to obtain a percentage (%) of the quantity of attached test specimen with respect to a specified dispensing quantity (0.4 µL). The analysis conditions at that time were as follows: the dispensing nozzle 11 was used along with a comparison nozzle made of stainless-steel in an identical manner to the dispensing nozzle 11 except without forming the non-affinity film 11d on the discharge end face 11b; and the test specimen had viscosities of 1 mPa·s and 3 mPa·s.

Given below is Table 1 that indicates the difference in the quantity of attached test specimen (nL) and the percentage (%) thereof found at the tip portion of each of the dispensing nozzle 11 and the comparison nozzle without a non-affinity face as the result of fluid analysis.

**Table 1**

| Viscosity of test specimen (mPa·s) | Dispensing nozzle | | Comparison nozzle | |
|---|---|---|---|---|
| | Attached quantity (nL) | Percentage of attached quantity (%) | Attached quantity (nL) | Percentage of attached quantity (%) |
| 1 | 0.4 | 0.1 | 44.2 | 11.1 |
| 3 | 0.6 | 0.2 | 23.7 | 5.9 |

Herein, the test specimen was prepared by mixing polyvinyl alcohol in pure water and adjusted to have viscosities of 1 mPa·s and 3 mPa·s. Regarding the dispensing nozzle 11 as well as the comparison nozzle with reference to FIG. 3, the diameter of the opening 11c was 0.27 mm, an inner diameter d of the straight portion was 0.95 mm, the outer diameter of the discharge end face 11b without the non-affinity film 11d was 0.55 mm, and a length L of the tapered portion in the longitudinal direction was 12 mm. Moreover, in the dispensing nozzle 11, the contact angle of the portion having the non-affinity film 11d with pure water was set to be 100°; and in the dispensing nozzle 11 and the comparison nozzle, the contact angle of the stainless-steel portion not having the non-affinity film 11d with pure water was set to be 50°.

As is obvious from the analysis result illustrated in Table 1; in the dispensing nozzle 11 having the non-affinity film 11d formed on the discharge end face 11b, the anti-drip property for the test specimen can be improved and the quantity of attached test specimen can be substantially reduced by 1/30 to 1/100 in absolute quantity as compared to the comparison nozzle. However, for the test specimen of high viscosity, it was found that the attached quantity is slightly higher.

### First embodiment, first and second comparison examples

Meanwhile, the effect on the actual dispensing performance of the dispensing nozzle 11 according to the present invention was confirmed in the following manner. For the dispensing nozzle 11 having the non-affinity film 11d made of fluorine contained resin (first embodiment), for a comparison nozzle (first comparison example) having the non-affinity film 11d formed also on the inner face of the holding tube portion 11a in the dispensing nozzle 11, and for a comparison nozzle (second comparison example) made of stainless-steel in an identical manner to the dispensing nozzle 11 except without forming the non-affinity film 11d on the discharge end face 11b; an actual dispensing quantity (µL) was measured when a specified dispensing quantity was set to 0.4 µL and when a test specimen having viscosities of 1 mPa·s and 3 mPa·s was dispensed (discharged).

In Table 2 is illustrated the measurement result along with an actual dispensing quantity difference (%) based on the actual dispensing quantity of 1 mPa·s. The actual dispensing quantity illustrated in Table 2 is obtained by discharging a fluid of known optical density (OD) as the test specimen through each of the dispensing nozzle 11 and the comparison nozzles to a spectroscopic cell, inletting pure water to each spectroscopic cell for diluting the test specimen, and then dividing the absorbance measured by a spectrophotometer by the dilution ratio. At the time of measurement, a dye was dissolved in the test specimen of 1 mPa·s to have the optical density of 1500 and the test specimen was dispensed through the dispensing nozzle 11 or a comparison nozzle to an empty spectroscopic cell. Then, the test specimen was diluted with 1500 µL of pure water equaling the dilution ratio of about 3000 times and optical density measurement was performed for the solution having the optical density in the vicinity of 0.5 using a spectrophotometer. To obtain the dilution ratio with precision, the weight of a spectroscopic cell before and after inletting a diluting liquid and in an empty state was measured using an electronic scale and the fluid volume was calculated. Meanwhile, the actual dispensing quantity difference (%) was obtained as (actual dispensing quantity difference/actual dispensing quantity of 1 mPa·s)×100.

**Table 2**

| Viscosity of test specimen (mPa·s) | First embodiment | | First comparison example | | Second comparison example | |
|---|---|---|---|---|---|---|
| | Actual dispensing quantity (µL) | Dispensing quantity difference (%) | Actual dispensing quantity (µL) | Dispensing quantity difference (%) | Actual dispensing quantity (µL) | Dispensing quantity difference (%) |
| 1 | 0.569 | 6.7 | 0.574 | 13.8 | 0.609 | 12.5 |
| 3 | 0.531 | | 0.495 | | 0.533 | |

As illustrated in FIG. 2, in comparison with the comparison nozzles in the first and second comparison examples; the actual dispensing quantity difference (%) in the dispensing nozzle 11 according to the present invention can be curbed to about half. Thus, with a simple configuration of forming the non-affinity film 11d on the discharge end face 11b, the dispensing nozzle 11 enables curbing variation in the dispensing quantity even if fluids of different viscosities are dispensed therethrough. Consequently, fluid samples over a broad viscosity range can be dispensed with a high degree of precision. Herein, it was found from the result regarding the first comparison example that, even if the non-affinity film 11d is formed on the inner face of the holding tube portion 11a in the dispensing nozzle 11, the variation in the dispensing quantity increases to a substantially equal level of the comparison nozzle (second comparison example) made of stainless-steel in an identical manner to the dispensing nozzle 11 except without forming the non-affinity film 11d on the discharge end face 11b. That makes it difficult to dispense fluid samples over a broad viscosity range with a high degree of precision. In essence, it was found that the variation in the dispensing quantity can be curbed by coating the discharge end face 11b with the non-affinity film 11d.

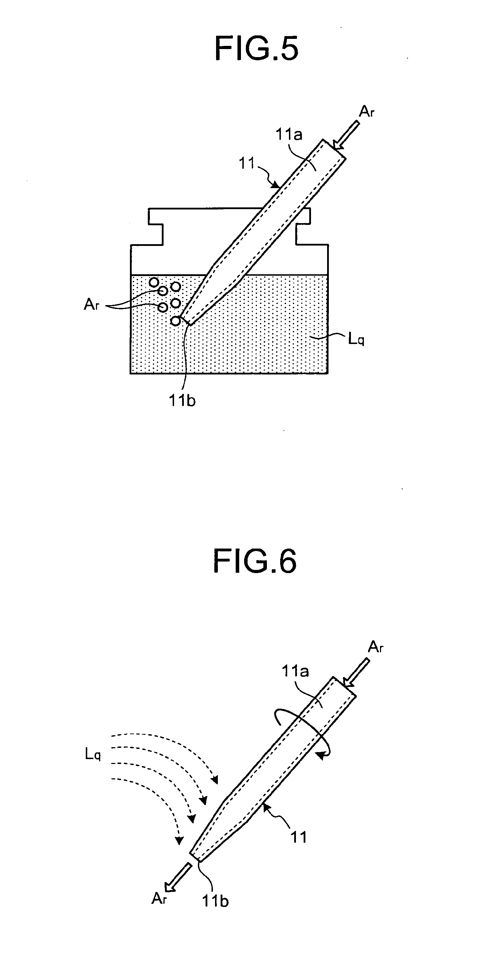

Herein, the non-affinity film 11d made of fluorine contained resin or silicone resin can be formed as given below. For example, for a dispensing nozzle manufactured by performing elongation processing on a metal, such as stainless-steel, or by performing injection molding on synthetic resin such as polystyrene; pressure air Ar is discharged from the tip of the dispensing nozzle 11 while the tip portion thereof is immersed in a liquid Lq of fluorine contained resin or silicone resin as illustrated in FIG. 5. Then, the dispensing nozzle 11 is pulled out from the liquid Lq and allowed to dry at normal temperature or high temperature. Consequently, the non-affinity film 11d is formed on the discharge end face 11b and the tip portion. In this case, it is sufficient to immerse a portion of about 3 to 5 mm from the tip of the dispensing nozzle 11 in the liquid Lq of fluorine contained resin or silicone resin.

The non-affinity film 11d made of fluorine contained resin or silicone resin can also be formed as given below. As illustrated in FIG. 6, the pressure air Ar pumped into the dispensing nozzle 11 is discharged from the tip thereof and the liquid Lq of fluorine contained resin or silicone resin is applied while rotating the dispensing nozzle 11 about the axis. Then, the dispensing nozzle 11 is allowed to dry at normal temperature or high temperature such that the non-affinity film 11d is formed on the discharge end face 11b and the tip portion. Herein, as the liquid Lq of fluorine contained resin, for example, the product name "Fluoro Surf" FG3020th-8.0, FG3030th-2.0 supplied by Fluoro Technology Corporation or the product name "Novec" N1720, N7300 supplied by Sumitomo 3M Limited can be used. Moreover, as the liquid Lq of silicone resin, for example, the product name "HIREC" 1550 supplied by NTT-AT or the product name "Rain-X" supplied by Shell Car Care International Limited can be used.

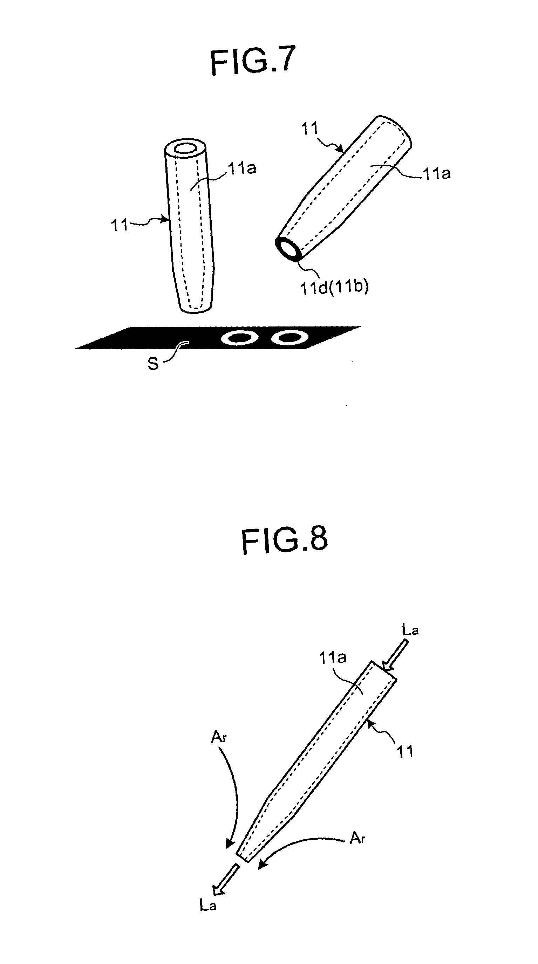

The non-affinity film 11d made of fluorine contained resin or silicone resin can also be formed as given below. As illustrated in FIG. 7, the discharge end face 11b of the dispensing nozzle 11 is put on a sheet S having fluorine contained resin or silicone resin applied thereon so that fluorine contained resin or silicone resin gets transferred on the discharge end face 11b. Then, fluorine contained resin or silicone resin is allowed to dry at normal temperature or high temperature such that the non-affinity film 11d is formed on the discharge end face 11b.

Besides, the non-affinity film 11d can be formed on the discharge end face 11b of the dispensing nozzle 11 by using techniques, such as the molecular vapor deposition technique, the sputtering technique (PVD, physical vapor deposition), the ion implantation technique, or the plasma-enhanced CVD technique.

Meanwhile, if the dispensing nozzle 11 is manufactured by performing elongation processing on a metal, such as stainless-steel, or by performing injection molding on synthetic resin, such as polystyrene as described above; then instead of forming the non-affinity film 11d on the discharge end face 11b, then an affinity film having affinity with the target fluid for dispensing can be formed on the inner face of the holding tube portion 11a so that the discharge end face 11b has a greater contact angle with the fluid than the inner face of the holding tube portion 11a. In this case, as illustrated in FIG. 8, an affinity liquid La is injected into the dispensing nozzle 11 while pumping the pressure air Ar from around the discharge end face 11b toward the tip side of the dispensing nozzle 11 and then the dispensing nozzle 11 is allowed to dry at normal temperature or high temperature. Because of that, an affinity film is formed on the inner face of the holding tube portion 11a. As the affinity liquid La, for example, a coating liquid of organic polysilane can be used.

If the dispensing nozzle 11 is fabricated from a metallic material; then, after a polymer film having affinity with the target fluid for dispensing is formed using the molecular vapor deposition technique, the discharge end face 11b can be exposed to an electron beam, or a laser beam, or ultraviolet rays to remove the polymer film so that the metal that has no affinity with the target fluid for dispensing gets exposed primarily at the discharge end face 11b of the nozzle tip. By doing that, in the dispensing nozzle 11, the discharge end face 11b has a greater contact angle with the target fluid for dispensing than the inner face of the holding tube portion 11a.

Although the dispensing nozzle according to the present invention is described for the use in the specimen dispensing device 10 that dispenses specimens, it is also possible to use the dispensing nozzle in a reagent dispensing device that dispenses reagents if fluid samples have a broad viscosity range. Moreover, although all the abovementioned dispensing nozzles are described to have a tapering tip portion, it is also possible to use dispensing nozzles having no tapering tip portion but a straight pipe-like shape.

### INDUSTRIAL APPLICABILITY

As described above, the present invention is applicable in dispensing fluid samples over a broad viscosity range with a simple configuration and a high degree of precision, and particularly suitable for a dispensing nozzle and an automatic analyzer.

## Claims

1. A dispensing nozzle comprising:
a holding tube portion that holds a fluid as a dispensing target; and
a discharge end face that is formed at a tip of the holding tube portion and that sucks in and discharges the fluid through an opening formed thereon, wherein
the discharge end face has a greater contact angle with the fluid than an inner face of the holding tube portion.

2. The dispensing nozzle according to claim 1, wherein the discharge end face has a non-affinity film having non-affinity with the fluid, the non-affinity film formed on a surface of the discharge end face.

3. The dispensing nozzle according to claim 1, wherein the holding tube portion has an affinity film having affinity with the fluid, the affinity film formed on the inner face of the holding tube portion.

4. The dispensing nozzle according to claim 1, wherein a boundary between the inner face of the holding tube portion and the discharge end face represents a boundary between differing contact angles with the fluid.

5. The dispensing nozzle according to claim 1, wherein the opening formed on the discharge end face is singular.

6. An automatic analyzer for causing a reaction between a specimen and a reagent by stirring and analyzing a reaction liquid by measuring an optical property thereof, the automatic analyzer comprising the dispensing nozzle according to any one of claims 1 to 5 for dispensing either one of the specimen or the reagent.
